# DEMANDE DE BREVET EUROPEEN

(11) **EP 0 811 322 A1**
(43) Date de publication de la demande: **10.12.1997**
(21) Numéro de dépôt: 97420085.9
(22) Date de dépôt: 04.06.1997
(51) Int. Cl.: A01N 25/34

(54) **Appât pour taupes et son procédé de fabrication**

(30) Priorité: 04.06.1996 FR 9607175
(71) Demandeur: Allegre, Bernard, 42370 Renaison (FR)
(72) Inventeur: Allegre, Bernard, 42370 Renaison (FR)
(74) Mandataire: Maureau, Philippe

(57) **Abrégé**

Appât réalisé sous une forme adaptée à la mise en place dans des galeries par des moyens mécaniques du type pince et comportant en combinaison un élément appétissant destiné à attirer l'animal, un poison et un élément assurant sa cohésion. L'élément appétissant destiné à attirer l'animal provient de la solidification du liquide issu d'une graisse ou huile végétale, ou minérale, ou de synthèse, additionnée d'un arôme culinaire.

## Description

La présente invention concerne un appât pour taupes et son procédé de fabrication.

Il est connu que les taupes, petits mammifères insectivores, possédant des membres antérieurs aux doigts réunis de manière à constituer une sorte de pelle, vivent sous terre en creusant de longues galeries détectables à la surface du sol par les taupinières, qui correspondent à des monticules formés par le rejet de la terre.

En creusant de telles galeries, ces taupes coupent les racines des plantes situées sur leur passage. Ces plantes, qui ne peuvent plus ni se nourrir, ni s'hydrater vont alors se dessécher et mourir, ce qui est très dommageable dans les jardins ou les potagers.

De plus, les taupinières, issues de la terre de ces galeries, nuisent à la planéité des terrains gazonneux tels que les pelouses, les terrains de golf ou de football, et autres similaires, ce qui est très astreignant pour leur entretien.

Il est habituel, pour essayer de détruire de tels animaux, d'utiliser diverses méthodes. C'est ainsi qu'il est fréquent d'avoir recours à différents types de dispositifs, déposés à l'intérieur des galeries, et destinés à piéger ces taupes.

Or, de tels dispositifs sont souvent difficiles à mettre en oeuvre, et n'aboutissent généralement pas à la disparition de ces animaux qui réussissent à les éviter en creusant d'autres galeries parallèles.

Pour remédier à ces inconvénients, il est connu, en fonction de la nourriture habituelle des taupes, qui chassent toute l'année dans les galeries, à la recherche de proies telles que les vers de terre, les vers blancs, les larves de taupins ou tout autre invertébré similaire, d'utiliser des vers artificiels recouverts d'un poison du type Chlorophacinone et de les placer à l'intérieur de ces galeries.

Toutefois, de tels appâts n'ont pas l'attrait désiré auprès des taupes, qui sont des animaux d'une nature très méfiante et qui possèdent un excellent odorat, l'odeur de l'être humain les faisant fuir.

Le document FR-A-2 652 485, au nom du Demandeur, concerne un appât pour taupes comportant en combinaison un élément appétissant destiné à attirer l'animal, un poison et un élément assurant la cohésion, l'élément appétissant provenant de la solidification du liquide issu de la décoction de farine animale et de graisse animale. Il est apparu que la graisse n'avait pas une saveur constante, cette saveur variant en effet selon la qualité, l'espèce et la cuisson des animaux.

De ce fait, l'élément appétissant ne dispose que d'une efficacité insuffisante pour attirer de façon certaine les taupes.

Le but de l'invention est de fournir un appât de conception simple, qui soit parfaitement efficace, et dont les qualités de fabrication et de goût soient absolument constantes.

A cet effet, l'appât qu'elle concerne, réalisé sous une forme adaptée à la mise en place dans des galeries par des moyens mécaniques du type pince et comportant en combinaison un élément appétissant destiné à attirer l'animal, un poison et un élément assurant sa cohésion, est caractérisé en ce que l'élément appétissant destiné à attirer l'animal provient de la solidification du liquide issu d'une graisse ou huile végétale, ou d'une huile minérale ou d'une huile de synthèse, additionnée d'un arôme culinaire.

La forme et la dimension de l'appât sont choisies de façon à permettre son introduction dans une galerie par des moyens mécaniques, de façon à éviter tout contact humain, l'odeur de l'être humain repoussant les taupes.

L'élément appétissant possède un goût et une odeur qui sont proches de ceux du ver de terre, qui constitue la principale source de nourriture des taupes, ce qui favorise l'attraction de celles-ci. Le fait que l'élément appétissant provienne d'une huile végétale permet de bénéficier d'une parfaite constance dans le goût, de telle sorte que la taupe est toujours attirée dans les mêmes conditions.

Avantageusement, l'arôme culinaire est un arôme fumé.

En outre, suivant une forme d'exécution de cet appât, l'arôme culinaire se présente sous la forme d'un liquide pâteux de couleur brune, est soluble dans l'eau et dans l'huile, possède une densité de l'ordre de 1 et possède un pH de l'ordre de 3,8 à 4 à 20°C.

Avantageusement, la graisse ou huile végétale est choisie parmi les huiles de tournesol, de pépins de raisin, de palme, de palmiste, de soja et de carthame.

L'huile minérale peut être avantageusement de l'huile de paraffine.

En outre, l'élément assurant sa cohésion est constitué par de la paraffine. Cette paraffine présente l'avantage, d'une part d'être suffisamment poreuse pour laisser percevoir le goût de l'appât à l'extérieur et, d'autre part, d'être un excellent support à la fois pour le poison et pour l'élément appétissant en réalisant une parfaite adhésion de l'ensemble. De plus, en raison de son imperméabilité, elle empêche la diffusion du poison lorsque l'appât a été déposé dans une galerie dont la terre se trouve ultérieurement détrempée, empêchant ainsi toute pollution du sol par ce poison en le protégeant contre les intempéries, de telle sorte que l'appât garde toute son efficacité.

Toutefois, il est possible d'avoir recours à un autre agent de cohésion transparent, du type matière polymère connue, qui possède les mêmes propriétés.

Suivant une autre caractéristique de l'invention, le poison destructeur est l'alpha chloralose. Ce poison est un poison sélectif et ne présente, de ce fait, aucun danger pour les autres animaux sauvages et domestiques.

Suivant une autre caractéristique, un procédé pour la fabrication de cet appât pour taupes, consiste à porter à ébullition un mélange homogène contenant environ 600 grammes de graisse végétale, 300 grammes de paraffine, 5 grammes d'arôme culinaire et 100 grammes de matière active telle que l'alpha choralose, puis à laisser refroidir l'appât liquide dans un récipient adapté, de façon à obtenir un appât solide aux dimensions et forme désirées.

Comme il va de soi, l'invention ne se limite pas à la seule forme d'exécution de cet appât, ni à son seul procédé de fabrication décrits ci-dessus à titre d'exemples, elle en embrasse au contraire toutes les variantes de réalisation.

## Revendications

1. Appât pour taupes, réalisé sous une forme adaptée à la mise en place dans des galeries par des moyens mécaniques du type pince et comportant en combinaison un élément appétissant destiné à attirer l'animal, un poison et un élément assurant sa cohésion, caractérisé en ce que l'élément appétissant destiné à attirer l'animal provient de la solidification du liquide issu d'une graisse ou huile végétale, ou d'une huile minérale ou d'une huile de synthèse, additionnée d'un arôme culinaire.

2. Appât pour taupes selon la revendication 1, caractérisé en ce que l'arôme culinaire est un arôme fumé.

3. Appât pour taupes selon l'une quelconque des revendications 1 et 2, caractérisé en ce que la graisse ou huile végétale est choisie parmi les huiles de tournesol, de pépins de raisin, de palme, de palmiste, de soja et de carthame.

4. Appât pour taupes selon l'une quelconque des revendications 1 et 2, caractérisé en ce que l'huile minérale est de l'huile de paraffine.

5. Appât pour taupes selon l'une quelconque des revendications 1 à 4, caractérisé en ce que l'élément assurant sa cohésion est constitué par de la paraffine.

6. Appât pour taupes selon la revendication 2, caractérisé en ce que l'arôme culinaire se présente sous la forme d'un liquide pâteux de couleur brune, est soluble dans l'eau et dans l'huile, possède une densité de l'ordre de 1 et possède un pH de l'ordre de 3,8 à 4 à 20°C.

7. Procédé de fabrication d'un appât pour taupes selon l'une des revendications 1 à 6, caractérisé en ce qu'il consiste à porter à ébullition un mélange homogène contenant environ 600 grammes de graisse végétale, 300 grammes de paraffine, 5 grammes d'arôme culinaire et 100 grammes de matière active telle que l'alpha chhoralose, puis à laisser refroidir l'appât liquide dans un récipient adapté, de façon à obtenir un appât solide aux dimensions et forme désirées.
